# EUROPEAN PATENT APPLICATION

(11) **EP 1 492 010 A1**
(43) Date of publication of application: **29.12.2004**
(21) Application number: 03101861.7
(22) Date of filing: 25.06.2003
(51) Int. Cl.: G06F 11/273

(54) **Remote management of a data processing unit allows power control from remote**

(71) Applicant: Agilent Technologies Inc, Palo Alto, CA 94306-2024 (US)
(72) Inventor: Metzger, Michael, 71034, Böblingen (DE)
(74) Representative: Barth, Daniel

(57) **Abstract**

A remote management unit (80, 90) is coupled to a local data processing unit (70) and - through a network (60) - to a remote data processing unit (10) allowing the remote data processing unit (80, 90) to provide at least one of: controlling operation of the local data processing unit (70), monitoring operation of the local data processing unit (70), monitoring data transmission of the local data processing unit (70), and controlling operation of the remote management unit (80, 90). The remote management unit (80, 90) comprises an own central processing unit - CPU - allowing to operate the remote management unit (80, 90) completely independent of an operation of the local data processing unit (70) as well as of an operation of the remote data processing unit (10). The remote management unit (80, 90) further comprises control unit (90) adapted to control a supply of power for the local data processing unit (70).

## Description

### BACKGROUND OF THE INVENTION

The present invention relates to remote management units.

EP-A-962862 and European Patent Application No. 03101048.1, both by the same applicant, each disclose a remote management unit coupled to a local data processing unit and comprising an own central processing unit (CPU) allowing to operate the remote management unit completely independent of the operation of the local data processing unit. The remote management unit is further coupled through a network to a remote data processing unit. The remote management unit thus allows the remote data processing unit to control and/or to monitor operation of the local data processing unit.

### SUMMARY OF THE INVENTION

It is an object of the present invention to provide an improved remote management unit. The object is solved by the independent claims. Preferred embodiments are shown by the dependent claims.

The remote management unit according to the invention is adapted to be coupled to a local data processing unit as well as through a network to a remote data processing unit allowing the remote data processing unit to provide at least one of: controlling operation of the local data processing unit, monitoring operation of the local data processing unit, monitoring data transmission of the local data processing unit, and controlling operation of the remote management unit. The remote management unit comprises an own central processing unit (CPU) allowing to operate the remote management unit completely independent of an operation of the local data processing unit as well as of an operation of the remote data processing unit. The remote management unit further comprises a control unit adapted to a supply of power for the local data processing unit.

The invention thus allows managing and controlling the local data processing unit including its power cycle. Further, e.g. by controlling the actual physical power supply of the local data processing unit, in contrast to simply controlling software-based power cycling, errors or failures due to or in such software can be avoided, thus leading to higher reliability.

The power supply for the local data processing unit can thus be completely and safely controlled from remote by the remote data processing unit. This can be in particular of advantage for providing remote services for the local data processing unit, such as first time installation of an operating system and application software, thus eliminating the need of the bench preparation of a new system; system re-start after system failure, typically OS hang; or scheduled power up/down of the local data processing unit.

For many applications, there will not even be a requirement to provide modifications in the local data processing unit, and it will be sufficient to simply plug the local data processing unit to the remote management unit including its power supper supply.

While the control unit preferably controls the supply of power on a secondary side of the power supply, the control unit can also control the supply of power to the power supply at a primary side. Secondary side shall mean the voltage or current level as to be supplied to the local data processing unit, while primary side shall mean the voltage or current level as received by the power supply and before a voltage or current level conversion (into the secondary side) as provided by the power supply.

In one embodiment, the control unit comprises a switch adapted for either enabling or disabling the supply of power from a power supply to the local data processing unit. The switch is preferably applied at the secondary side of the power supply in order to enable or disable the supply of power at the secondary level from the power supply to the local data processing unit.

Accordingly, the switch can also be applied at the primary side of the power supply in order to enable or disable the supply of power to the power supply. Even a combination of both, i.e. switches applied on primary as well as secondary side, can be of advantage in certain applications.

In one embodiment, the remote management unit is also coupled to the power supply, so that the power supply will also power the remote management unit. Thus, an additional power supply for the remote management unit can be avoided.

In one preferred embodiment, the remote management unit is embodied by a diagnostic unit as disclosed e.g. in aforementioned EP-A-962862, the teaching thereof shall be incorporated herein by reference. In this case, the remote management unit is coupled to an internal data bus of the local data processing unit. Configuration and data exchange can be performed through the internal data bus of the data processing unit, e.g. a standard PCI bus, PCI-X, PCI-Express, Serial ATA, Universal Serial Bus (USB), low Pin Count Bus (LPC), etc. For example, VGA console redirection can be performed by directly reading from the graphics chips linear frame buffer via PCI, as disclosed in the EP-A-1168154 by the same applicant, the teaching thereof shall be incorporated herein by reference.

In one embodiment, the remote management unit is coupled to at least one of: a graphics interface and a peripheral interface of the local data processing unit. Such graphic interface can be, for example, a standard VGA, which is often used to connect e.g. a CRT monitor. Another common interface can be DVI (Digital Video Interface), commonly used to connect TFT flat screen monitors to the data processing unit, FPI, etc.

The peripheral interface can be, for example, a universal standard bus (USB). This interface is commonly used to dynamically extend the input/output capabilities of a data processing unit by supporting devices such as keyboard, mouse, CD, DVD, floppy disk, serial ports, hard drives (HDD), CD writers, memory etc. Other standard interfaces such as RS 232, Firewire, and parallel interfaces can be used alternatively.

Both aforedescribed types of coupling (internal bus, interfaces) between the remote management unit and the local data processing unit are further disclosed in detail (in particular in figs. 2 and 3 and the accompanying specification) in the aforementioned European Patent Application No. 03101048.1, the teaching thereof shall be incorporated herein by reference. Both coupling types, or parts thereof, can also be applied concurrently.

The network can be any kind of data transmission network, wired or wireless, such as a data communication link, a local area network (LAN), a Universal Serial Bus (USB) interconnection, etc.

The invention can be partly or entirely embodied or supported by one or more suitable software programs, which can be stored on or otherwise provided by any kind of data carrier, and which might be executed in or by any suitable data processing unit.

The data processing unit (local or remote) can be any kind of system enabling processing of data and providing corresponding interfaces (including internal bus coupling), such as e.g. computers, personal computers (PCs), or workstations, but also other purpose devices such as e.g. vending machines, automated teller machines, test or measuring devices, etc., each adapted to also provide corresponding interfaces and data processing.

### BRIEF DESCRIPTION OF THE DRAWINGS

Other objects and many of the attendant advantages of the present invention will be readily appreciated and become better understood by reference to the following detailed description when considering in connection with the accompanied drawing(s). Features that are substantially or functionally equal or similar will be referred to with the same reference sign(s).
Figure 1 shows the principle architecture according to the present invention.
Figures 2 and 3 show preferred embodiments.

### MORE DETAILED DESCRIPTION OF PREFERRED EMBODIMENTS ACCORDING TO THE INVENTION

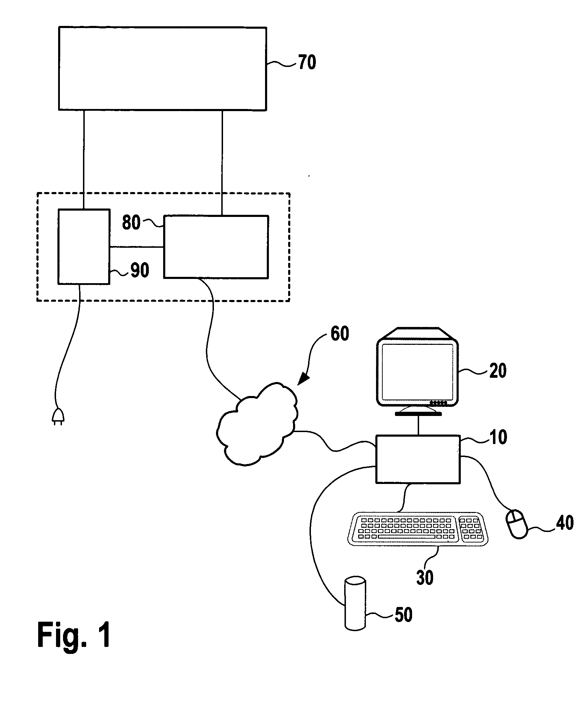

In Figure 1, a remote data processing unit 10 is coupled to a display 20 for displaying information, a keyboard 30 for inputting information, a mouse 40 for moving a pointer displayed e.g. on the display 20, in a mass storage device 50 such as a CD-Rom, floppy disc, or hard disc. The remote data processing unit 10 is further coupled to a network 60, which can be a local area network (LAN), a wide area network (WAN), a wireless LAN or any other embodiment that is suited to exchange data, e.g. USB. A local data processing unit 70 is coupled to a remote management unit 80, and the remote management unit 80 is further coupled to the network 60. The local data processing unit 70 might also comprise or be coupled to one or more devices such as keyboard, mouse, display, mass storage device, etc., however, this shall be omitted here for the sake of simplicity.

In operation, when the remote data processing unit 10 wants to control or operate the local data processing unit 70 e.g. by inputting data through the keyboard 30 or displaying information from the local data processing unit 70 on the display 20, the remote data processing unit 10 receives the keyboard information from the keyboard 30 and transmits that keyboard information through the network 60 to the remote management unit 80. The remote management unit 80, in turn, transmits the keyboard information to the local data processing unit 70.

Correspondingly, information from the local data processing unit 70, such as graphics information, is transmitted through the remote management unit 80 and the network 60 to remote data processing unit 10, which, in turn, e.g. provides the received graphics information to the display 20. Thus, the remote data processing unit 10 can fully operate the local data processi ng unit 70, e.g. by transmitting or receiving KVM (Keyboard, Video, Mouse) data. Further, medium data from or to the mass storage 50 can thus be communicated between the remote data processing unit 10 and the local data processing unit 70.

Other modes of operation are further disclosed in the aforementioned EP-A-962862 (in particular monitoring operation of the local data processing unit 70) or in EP-A-01235156 (in particular data loading from remote) by the same applicant, the teaching of those documents in particular with respect to those modes of operation shall be incorporated herein by reference.

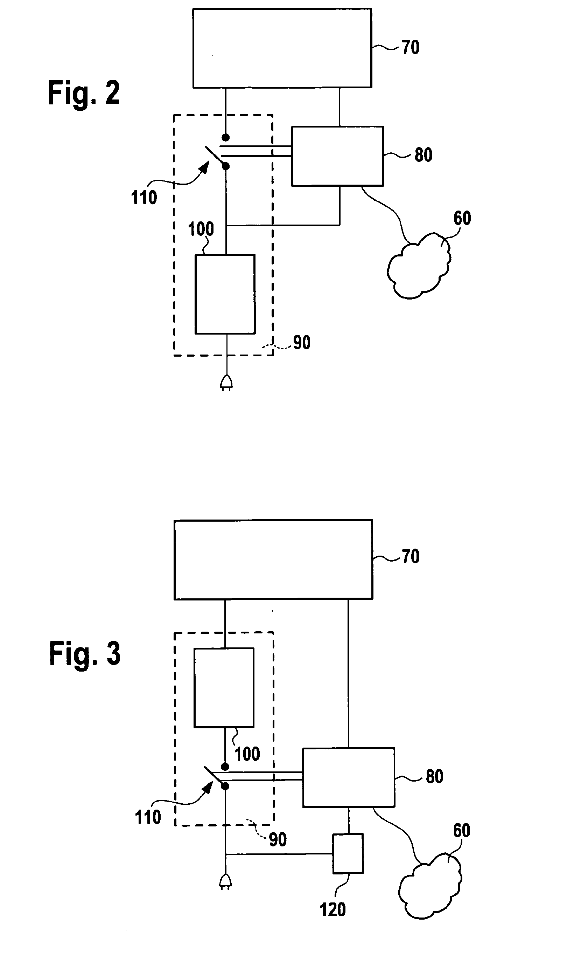

The remote management unit 80 further comprises a control unit 90 for controlling power supply for the local data processing unit 70. Though the remote management unit 80 and the control unit 90 are preferably incorporated in one physical unit (as indicated by the dotted line around both units), they might also be provided independent of each other e.g. in physically separated units (as exemplarily shown for the embodiments in Figs. 2 and 3). Figs. 2 and 3 illustrate preferred embodiments of the control unit 90. In both figures, the control unit 90 comprises a power supply 100 and a controllable switch 110. The power supply 100 is provided to supply power for the local data processing unit 70, and the switch 110 is adapted for either enable or to disable the supply of power from the power supply 100 to the local data processing unit 70. Operation of the switch 110 is controlled by the remote management unit 80.

In Fig. 2, the control unit 90 controls the supply of power on a secondary side of the power supply 100, as the voltage or current level to be supplied to the local data processing unit 70. The switch 110 is coupled between the power supply 100 and the local data processing unit 70 in order to switch on or off the supply of power at the secondary level from the power supply 100 to the local data processing unit 70.

Further in Fig. 2, the remote management unit 80 might also be coupled to the power supply 100 to power the remote management unit 80, so that no additional power supply for the remote management unit is required.

In Fig. 3, the control unit 90 controls the supply of power on a primary side of the power supply 100, as the voltage or current level as received by the power supply 100 and before a voltage or current level conversion (into the secondary side for the local data processing unit 70) as provided by the power supply 100. The power supply 100 is coupled between the switch 110 and the local data processing unit 70 in order to enable or disable the supply of power to the power supply 100. An own power supply 120 might be provided for powering the remote management unit 80.

The power supply 100 can be integrated within the local data processing unit 70 (not shown in the figures) or be external to local data processing unit 70 (as exemplarily shown in the embodiments of Figs. 2 and 3).

## Claims

1. A remote management unit (80, 90), wherein:
the remote management unit (80, 90) is adapted to be coupled to a local data processing unit (70),
the remote management unit (80, 90) is further adapted to be coupled through a network (60) to a remote data processing unit (10) allowing the remote data processing unit (80, 90) to provide at least one of: controlling operation of the local data processing unit (70), monitoring operation of the local data processing unit (70), monitoring data transmission of the local data processing unit (70), and controlling operation of the remote management unit (80, 90),
the remote management unit (80, 90) comprises an own central processing unit - CPU - allowing to operate the remote management unit (80, 90) completely independent of an operation of the local data processing unit (70) as well as of an operation of the remote data processing unit (10), and
the remote management unit (80, 90) further comprises control unit (90) adapted to control a supply of power for the local data processing unit (70).

2. The remote management unit (80, 90) of claim 1 or any one of the above claims, wherein the control unit (90) comprises a power supply (100) adapted to supply power for the local data processing unit (70) and a switch (110) adapted for either enable or to disable the supply of power from the power supply (100) to the local data processing unit (70).

3. The remote management unit (80, 90) of claim 1 or any one of the above claims, wherein the power supply (100) is further coupled to the remote management unit (80, 90) and adapted to supply power for the remote management unit (80, 90).

4. The remote management unit (80, 90) of claim 1 or any one of the above claims, wherein:
• the remote management unit (80, 90) is coupled to at least one of: a graphics interface and a peripheral interface of the local data processing unit (70),
• the graphics interface is adapted for providing at least one of: inputting graphics information from a device external to the local data processing unit, outputting graphics information to a device external to the local data processing unit,
• the peripheral interface is adapted for providing at least one of: inputting peripheral information from a device external to the local data processing unit, outputting peripheral information to a device external to the local data processing unit.

5. The remote management unit (80, 90) of the preceding claim, wherein:
• the graphics interface is one of: a VGA interface, Digital Video Interface, Flat Panel Interface;
• the peripheral interface is one of: a USB interface, Firewire, RS232.

6. The remote management unit (80, 90) of claim 1 or any one of the above claims, wherein:
the remote management unit (80, 90) is coupled to an internal bus of the local data processing unit (70), preferably one of: PCI, PCIX, PCI-Express, Serial ATA, low Pin Count Bus.

7. The remote management unit (80, 90) of claim 1 or any one of the above claims, wherein:
the network (60) is one of: a data communication link, a local area network, and a Universal Serial Bus interconnection.

8. A method executed in a system wherein:
• a remote management unit (80, 90) is coupled to a local data processing unit (70),
• the remote management unit (80, 90) is further coupled through a network (60) to a remote data processi ng unit (10) allowing the remote data processing unit (80, 90) to provide at least one of: controlling operation of the local data processing unit (70), monitoring operation of the local data processing unit (70), monitoring data transmission of the local data processing unit (70), and controlling operation of the remote management unit (80, 90), and
• the remote management unit (80, 90) comprises an own central processing unit - CPU - allowing to operate the remote management unit (80, 90) completely independent of an operation of the local data processing unit (70) as well as of an operation of the remote data processing unit (10);
the method comprising a step - executed by the remote management unit (80, 90) - of controlling a supply of power for the local data processing unit (70).

9. The method of the above claim, wherein the step of controlling a supply of power comprises a step of either enabling or disabling the supply of power from a power supply (100) to the local data processing unit (70).

10. A software program or product, preferably stored on a data carrier, for executing the method any one of the above claims when run on a data processing system such as a computer.
